# EUROPEAN PATENT APPLICATION

(11) **EP 1 229 722 A2**
(43) Date of publication of application: **07.08.2002**
(21) Application number: 02396008.1
(22) Date of filing: 30.01.2002
(51) Int. Cl.: H04N 1/04

(54) **A method for imaging of manufacturing processes**

(30) Priority: 31.01.2001 FI 20010180
(71) Applicant: Procemex Oy, 44100 Äänekoski (FI)
(72) Inventor: Valkonen, Mika Petri, 44100 -Äänekoski (FI); Snellman, Jorma Heikki Antero, 40900 Säynätsalo (FI)
(74) Representative: Pursiainen, Timo Pekka

(57) **Abstract**

The present invention relates to a method for imaging of manufacturing processes. In the method a line scan camera (2) is used for imaging an object (3) to be monitored. The line scan camera contains photoelectric conversion means arranged in a line, wherein the conversion means of the line scan camera (2) are utilized to form at least a first (60) and a second set of pixel values (61). At least two video signals of different phases are formed from said at least first (60) and second set of pixel values (61) produced by the line scan camera.

## Description

The present invention relates to a method for imaging of manufacturing processes, in which method a line scan camera is used for imaging of an object to be monitored, which line scan camera contains photoelectric conversion means arranged in a row, wherein the conversion means of the line scan camera are utilized to produce at least a first and a second set of pixel values. The invention also relates to a system for imaging of manufacturing processes, which comprises at least one line scan camera for imaging of an object to be monitored, which line scan camera contains photoelectric conversion means arranged in a row, wherein the conversion means of the line scan camera are arranged to produce at least a first and a second set of pixel values.

Typically, an array camera is used in different systems for imaging of manufacturing processes, by means of which array camera the aim is to image the progress of a continuous manufacturing process and to detect possible errors, deviations in quality or corresponding phenomena occurring in the manufacturing process. Such an array camera imaging method is used for example in imaging of a paper web, wherein images are taken from the examined paper web and they are analysed to detect possible deviations. In such a solution there is, however, the drawback that at such a point of the process in which imaging should be performed, it may be difficult to find such a location for the array camera in which the view of the object to be imaged, such as the paper web, is sufficiently unobstructed. Thus, obstacles on the imaging area of the array camera disturb the imaging of the actual object to be examined, and delimit the imaging area available so that it becomes smaller than the imaging area of the array camera. Another drawback in such an array camera system is that the video signal produced by the camera has points of discontinuity for instance during frame synchronization pulses. Thus, the camera is not necessarily capable of imaging the moving object to be imaged without gaps. Therefore, some of the possible errors may remain unnoticed.

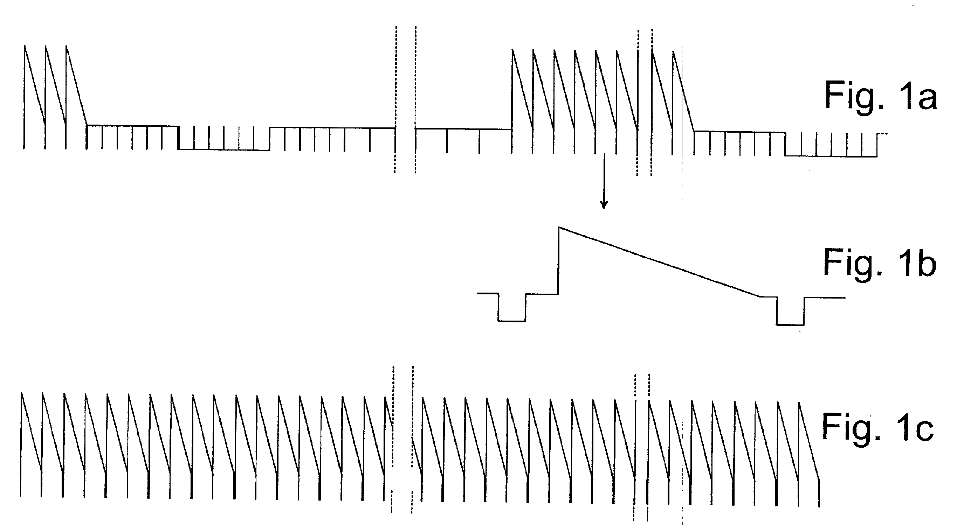

A generally known and used video standard is for example BT.470. The appended Fig. 1a shows the structure of a video signal according to this video standard. It comprises a frame synchronization pulse train, the length of which is 24 lines, and thereafter an image signal containing 288 scanning lines. Each scanning line also comprises line synchronization pulses, as shown in Fig. 1b.

In prior art imaging systems based on array cameras, problems are also caused by the fact that the line speeds of processes are increased, wherein less time is left for imaging of details. When the line speed is increased, the imaging area should be increased as well, so that the product line could be imaged without gaps. If practical reasons, for example, prevent the arranging of the necessary imaging area in the travel direction of the product in the manufacturing process, the product line cannot be imaged without gaps by means of conventional array cameras based on the BT.470 standard, having a frame frequency of 50/60 half frames per second. Attempts can be made to solve this problem by increasing the frame frequency sufficiently high, for example into frame frequencies in the order of 100 to 300 Hz, but this results in that the image information to be formed deviates from the standards generally in use. Thus, the act of storing and processing such images requires special apparatuses, because it is not possible to implement such a system by means of conventional array cameras and image processing devices that are commercially available. The use of special systems considerably increases the manufacturing costs of such an image processing system.

It is possible to try to solve the above-mentioned problem caused by the increase in the line speed also by using a line scan camera producing one-dimensional images instead of a conventional array camera. The image sensors of such a line scan camera contain only one row of image pixels, which corresponds to one horizontal scanning line in an array camera. By means of such line scan cameras it is possible to attain a very high imaging frequency, for example an imaging frequency corresponding to the line frequency of the array camera, i.e. approximately 15 to 16 kHz, but also a higher one. Thus, by means of the line scan camera it is possible to produce a continuous image of a moving object without gaps. The use of such a line scan camera, however, also causes such a problem that by means of conventional image processing apparatuses based on general standards it is not possible to process the image formed by this line scan camera, but a special apparatus must be arranged for this purpose.

It is an aim of the present invention to provide a method for imaging of manufacturing processes, by means of which it is possible to image a manufacturing process without gaps, and in which method image data according to an existing image standard is generated. The invention is based on the idea, that the imaging is conducted by means of a line scan camera in such a manner that the image formed by the line scan camera is converted into at least two video signals of different phases according to a general video standard. To be more exact, the method according to the present invention is mainly characterized in that at least two video signals of different phases are generated from a first and second group of pixel values produced by a line scan camera. The system according to the present invention is primarily characterized in that the system comprises means for forming at least two video signals of different phases from at least a first and a second group of pixel values produced by a line scan camera.

Considerable advantages are achieved by the present invention when compared to methods and systems of prior art. By means of the arrangement according to the invention it is also possible to conduct imaging of a rapidly moving product line so that gaps do not occur in the imaging. In the method according to the invention, special, expensive image processing systems are not necessary either, because the method according to the invention produces a video image according to a generally used standard. Thus, it is possible to store the video image by using for example video recording devices according to the standard, and the processing of an image is typically also successful by means of generally used image processing systems. Thus, it is also possible to attain savings in costs in the manufacture of the system. When the method according to the invention is applied, the effect of the obstacles in the vicinity of the object to be imaged is also considerably less significant in the imaging than when an array camera system of prior art is used.

In the following, the present invention will be described in more detail with reference to the appended drawings, in which
- Fig. 1a: shows a video signal according to a general video standard,
- Fig. 1b: shows a scanning line of the signal according to Fig. 1a,
- Fig. 1c: shows the signal produced by the line scan camera in a reduced manner,

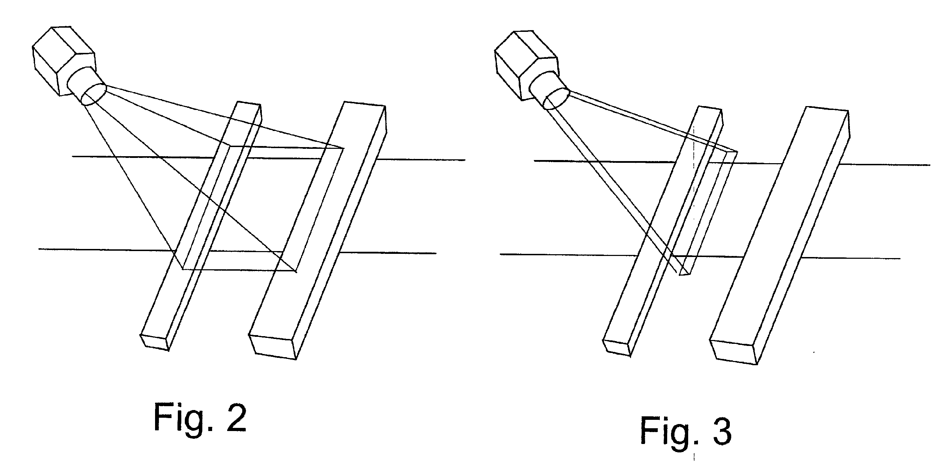

- Fig. 2: illustrates an example situation in a reduced manner, in which the product line is imaged with an array camera,
- Fig. 3: correspondingly illustrates a situation in which the product line is imaged with a line scan camera,
- Fig. 4: shows an image processing system according to a preferred embodiment of the invention in a reduced manner, and
- Fig. 5: shows an example of image data produced by means of the method according to the invention.

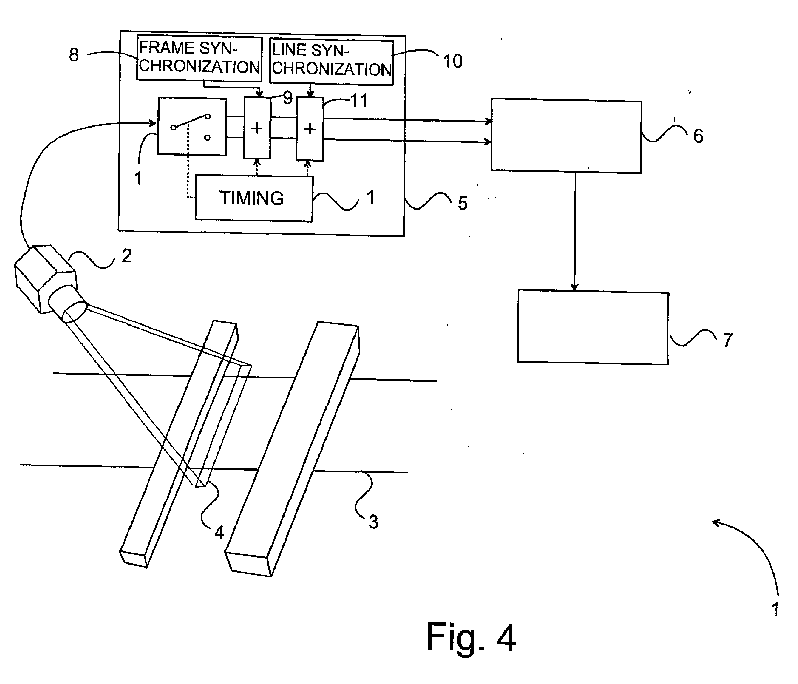

In the following, the method according to a preferred embodiment of the invention will be described with reference to the image processing system 1 shown in Fig. 4. A line scan camera 2 is utilized to image the product line 3 to be examined, which product line can be for example a paper web, a plastic web, or the like. The area imaged by the line scan camera 2 is shown by a cone 4. The image signal of the line scan camera is conducted to a conversion unit 5 in which processing actions of the image signal of the line scan camera are conducted. In the conversion unit 5, the image signal of the line scan camera is converted into at least two video signals of different phases which are led for example to an image processing unit 6 for further processing. In the image processing unit 6 these video signals of different phases can be processed separately as individual images, or they can be combined to form a single continuous image signal. From the image processing unit 6 the image signals can be led for example to a storage unit 7.

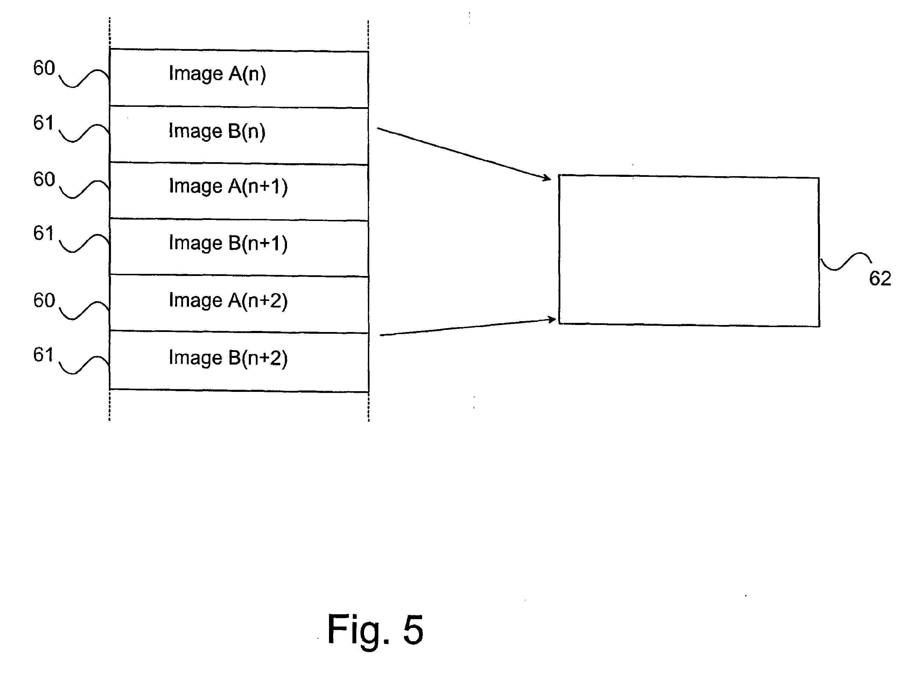

The line scan camera 2 is utilized to image the product line to be imaged in such a manner that one shot produces an image preferably transverse to the product line 3 that comprises a group of image pixels. The image information contained in these image pixels is transmitted from the line scan camera 2 to the conversion unit 5, advantageously in a series mode signal shown in Fig. 1c in a reduced manner. In the conversion unit 5 these pixel values are stored into a memory and converted into a video signal, if necessary. In connection with the conversion into a video signal, for example the frame synchronization pulses produced by a frame synchronization block 8 are combined to the pixel values in a first combination block 9 and the line synchronization pulses produced by a line synchronization block 10 are combined to the pixel values in a second combination block 11. One scanning line of the video signal is advantageously produced from the pixel values of one line. This scanning line comprises the pixel information and synchronization pulses, as shown in the appended Fig. 5b. The above-described stages of imaging and conversion into a video signal are repeated until a set number of scanning lines has been formed in the video signal. In the method according to a preferred embodiment of the invention, one image comprises 288 scanning lines followed by a frame synchronization pulse section comprising for example 24 scanning lines. In the method according to a preferred embodiment of the invention, the imaging by means of the line scan camera continues at this stage, but a second signal, substantially similar to the first video signal is produced from the images of the line scan camera, i.e. a set number of scanning lines is combined to form one image signal, and the frame synchronization pulses are added. This is shown in the chart of Fig. 4 by means of a switch 12, which is controlled by a control block, but it is obvious that in practical embodiments this function can also be implemented in other ways instead of a switch. In the conversion unit 5 two or more video signals according to a given standard are produced, which video signals are arranged in different phases so that during the frame synchronization pulses of one image signal, the product line 3 is imaged, and the second video signal is produced from this imaging. Thus, the problem of systems of prior art does not occur, in which the changes taking place during the frame synchronization pulses cannot be detected.

After said video signals have been produced in the conversion unit 5, it is possible to conduct further processing actions known as such for these video signals in different phases for example in the image processing unit 6. Because two normal standard video signals are produced as a result of the conversion, in which video signals the active imaging area advantageously covers slightly over a half of the normal imaging area, the simplest way of viewing the images is by means of conventional video monitors. Thus, the video monitors show a real-time image resembling a normal image, but having possibly a distorted aspect ratio. When the above-mentioned example values are used, the aspect ratio of this imaging area is 23:10, but it is obvious that other aspect ratios can also occur in practical applications.

It is also possible to store the video signals produced as a result of the conversion for example by means of video recorders or other video storing means for examination at a later stage. In computer vision systems, both separate video signals are advantageously converted into a digital format as a matrix image before the images are processed and/or stored. In this matrix image conversion stage it is possible to remove the unused imaging area from the images, if desired. Furthermore, the image signals produced by means of the method according to the invention can be combined to form one single image of a larger size or a continuous flow of images, if necessary. This takes place advantageously in such a manner that the active imaging areas of successive images are assembled on top of each other in the same image matrix, wherein the result is a larger, unbroken image or a continuous flow of images without gaps.

By means of digital image processing it is also possible to produce a video image from the image flow that complies with the actual aspect ratio. Thus, the starting point of the image can be determined beyond the original image boundaries with the accuracy of one scanning line, starting from which the final image is produced by scaling the final object image into its actual proportions by reducing or increasing the number of scanning lines. This is illustrated in the appended Fig. 5, in which the reference numeral 60 indicates the imaging area presented by the first video signal produced by the line scan camera, and the reference numeral 61 indicates the imaging area presented by the second video signal produced by the line scan camera 2, respectively. Thus, for example one imaging area 60 of the first video signal and one imaging area 61 of the second video signal are combined into one image 62. When necessary, some of the scanning lines are removed so that a final image complying with the desired aspect ratio is attained. One line contains for example 720 pixels, and one imaging area comprises for example in the first video signal 312 scanning lines and in the second video signal 313 scanning lines. From these 625 scanning lines for example an image containing 576 scanning lines and 720 pixels per scanning line is produced. It is, however, obvious that the above-presented numerical values are mentioned only to clarify the invention, not to limit the scope of the invention.

In connection with a system 1 according to the invention it is possible to use either an analog or digital line scan camera 2. When an analog line scan camera is used, it is possible to implement the other components of the system 1 primarily in an analog format. Correspondingly, when a digital line scan camera is used, the digital image information produced by the line scan camera is processed in digital format for example in a digital signal processing unit (not shown). Thus, the digital image information is converted into an analog format, if necessary, for example for storing into a video recorder. At present, there are also known video recorders in which the image information can be stored in digital format and the conversion into an analog format is not conducted until the image is presented.

The present invention is not limited solely to the above-presented embodiments, but it can be modified within the scope of the appended claims.

## Claims

1. A method for imaging of manufacturing processes, in which method a line scan camera (2) is used for imaging of an object (3) to be monitored, which line scan camera contains photoelectric conversion means placed in a row, wherein the conversion means of the line scan camera (2) are utilized to form at least a first (60) and a second set of pixel values (61), **characterized in that** at least two video signals of different phases are formed from the at least first (60) and second set of pixel values (61) produced by the line scan camera.

2. The method according to claim 1, **characterized in that** in the method said at least two video signals of different phases are combined to form a single video signal.

3. The method according to claim 1 or 2, **characterized in that** in the method the production of said at least two video signals of different phases comprises at least the following stages:
- a first set of scanning lines is formed of the first set of pixel values (60) by adding frame synchronization pulses thereto,
- said first set of scanning lines is supplemented with frame synchronization pulses, wherein a first video signal is formed,
- a second set of pixel values (61) is formed by imaging the object at least during the frame synchronization pulses of the first video signal,
- a second set of scanning lines is formed of the second set of pixel values (61) by adding line synchronization pulses thereto,
- said second set of scanning lines is supplemented with frame synchronization pulses, wherein a second video signal is formed, and
- the above-mentioned steps are repeated.

4. The method according to claim 1, 2 or 3, **characterized in that** the object (3) to be imaged is a moving product line, such as a paper web.

5. A system for imaging of manufacturing processes, which system comprises at least one line scan camera (2) for imaging of an object (3) to be monitored, which line scan camera contains photoelectric conversion means placed in a row, wherein the conversion means of the line scan camera (2) are arranged to produce at least a first (60) and a second set of pixel values (61), **characterized in that** the system comprises means (5) for forming at least two video signals of different phases from at least first (60) and second set of pixel values (61) produced by the line scan camera.

6. The system according to claim 5, **characterized in that** it comprises means (6) for combining said at least two video signals of different phases to form a single video signal.

7. The system according to claim 5 or 6, **characterized in that** the means (5) for forming at least two video signals of different phases comprise means (10,11) for adding line synchronization pulses to said first (60) and second set of pixel values (60), and means (8, 9) for adding frame synchronization pulses to said at least first (60) and second set of pixel values (60).
